# EUROPÄISCHE PATENTSCHRIFT

(11) **EP 1 663 564 B1**
(45) Veröffentlichungstag und Bekanntmachung des Hinweises auf die Patenterteilung: **11.01.2012**
(21) Anmeldenummer: 04739515.7
(22) Anmeldetag: 02.06.2004
(51) Int. Cl.: B23K 11/31

(54) **SCHWEISSZANGE**
WELDING TONGS
PINCE PORTE-ELECTRODE

(30) Priorität: 15.09.2003 DE 20314294 U
(43) Veröffentlichungstag der Anmeldung: 07.06.2006
(73) Patentinhaber: SWAC Electronic GMBH, CH-6303 Zug (CH)
(72) Erfinder: SCHMITT-WALTER, Stefan, 82041 Oberhaching (DE)
(74) Vertreter: Grünecker, Kinkeldey, Stockmair & Schwanhäusser
(86) Internationale Anmeldenummer: PCT/EP2004/005935
(87) Internationale Veröffentlichungsnummer: WO 2005/032754

(56) Entgegenhaltungen:
- EP-A- 0 310 338
- EP-A- 1 352 700
- US-A- 4 024 370
- US-A- 4 684 778
- US-B1- 6 596 958

## Beschreibung

Die Erfindung betrifft eine Schweißzange mit zwei relativ zueinander beweglichen Schweißzangenarmen, von denen wenigstens ein erster relativ zu einem Antriebsgehäuse zwischen einer Einschub- und einer Schweißstellung verstellbar gelagert ist, in welcher Schweißstellung ein zu verschweißendes Werkstück zwischen im Wesentlichen aneinander zuweisenden Schweißkontakten an Enden der Schweißzangenarme geklemmt ist.

Solche Schweißzangen werden beispielsweise bei der Automobilherstellung entlang von Fertigungsstraßen eingesetzt. Sie dienen zum Verschweißen von Blechen als Werkstücken, wobei die entsprechenden Schweißkontakte auf gegenüberliegenden Seiten der Bleche mit in der Regel vorbestimmter Kraft aufgedrückt und dann ein Schweißpunkt oder dergleichen gesetzt wird. Dabei wird die Schweißzange durch eine entsprechende Handhabungseinrichtung so bewegt, dass der zweite Schweißzangenarm mit dem entsprechenden Schweißkontakt an das zu verschweißenden Blech angenähert wird und anschließend der erste Schweißzangenarm in seine Schweißstellung verstellt wird, in der die Bleche zwischen den Schweißkontakten mit entsprechender Anpresskraft geklemmt sind.

Eine entsprechende Anpresskraft kann in diesem Zusammenhang bis zu einigen kN oder eventuell auch noch mehr betragen. Sind die entsprechenden Schweißkontakt nicht genau zur Aufnahme dieser Anpresskraft zueinander ausgerichtet, treten Querkräfte auf, die ebenfalls im Bereich von einigen kN liegen können, je nach Fehler bei der Ausrichtung der Schweißkontakte zueinander.

Die Querkräfte können dabei so groß werden, dass entweder die Schweißzangenarme, deren Lager oder andere Teile der Schweißzange beschädigt werden.

Aus der Praxis.ist es bekannt, zur Aufrechterhaltung einer genauen Ausrichtung der Schweißzangenarme zueinander und damit zur relativ genauen Zusammenführung der Schweißkontakte beispielsweise den ersten Schweißzangenarm am zweiten Schweißzangenarm verschieblich zu lagern. Diese Lagerung ist in der Regel außerhalb des Antriebsgehäuses zwischen diesem und den Schweißkontakten angeordnet. Zwar ergibt sich durch eine solche Lagerung eine gute Ausrichtung der Schweißkontakte zueinander, allerdings ist der Freiraum zwischen den Schweißzangenarmen durch die Lagerung eingeschränkt, so dass der Raum zwischen den Schweißzangenarmen nur noch begrenzt zur Aufnahme eines entsprechenden Werkstücks nutzbar ist. Ist weiterhin der Abstand zwischen den Schweißzangenarmen relativ groß, so muss auch die Lagerung mit entsprechender Größe ausgebildet sein.

Eine solche Lagerung erschwert weiterhin die Montage oder Demontage der Schweißzangenarme, da die Lagerung entsprechend ebenfalls montiert oder demontiert werden muss.

Der Erfindung liegt daher die Aufgabe zugrunde, eine Schweißzange der eingangs genannten Art dahingehend zu verbessern, dass mit relativ geringem konstruktivem Aufbau und ohne Einschränkung des Freiraums zwischen den Schweißzangenarmen diese zum Kontaktieren des Werkstücks mit den Schweißkontakten genau relativ zueinander verstellbar sind.

Diese Aufgabe wird im Zusammenhang mit den Merkmalen des Oberbegriffs des Anspruchs 1 dadurch gelöst, dass die Schweißzange ein selbsttragendes, entlang des Antriebsgehäuses bewegliches Verschiebegehäuse aufweist, welches eine den ersten Schweißzangenarm außerhalb des Antriebsgehäuses abstützende Halteeinrichtung aufweist.

Dadurch sind die Schweißzangenarme nicht direkt aneinander geführt, sondern der erste Schweißzangenarm wird durch die Halteeinrichtung während seiner Verstellung zwischen Ausschub- und Schweißstellung abgestützt. Die Halteeinrichtung ist Teil eines Verschiebegehäuses, das entlang des Antriebsgehäuses beweglich ist. Die Halteeinrichtung kann an einer auswählbaren Stelle des zweiten Schweißzangenarmes mit ebenfalls ausgewählter Ausrichtung relativ zum Schweißzangenarm angeordnet werden. Es besteht die Möglichkeit, dass das Verschiebegehäuse und damit die Halteeinrichtung sich in geringerem Maße als der erste Schweißzangenarm bewegen, so dass bei ausreichender Abstützung des Schweißzangenarms durch die Halteeinrichtung zusätzlich eine Relativbewegung zwischen diesen stattfindet.

Um allerdings eine solche Relativbewegung und eine entsprechende Lagerung zwischen erstem Schweißzangenarm und Halteeinrichtung zu vermeiden, kann die Halteeinrichtung zusammen mit dem ersten Schweißzangenarm zwischen dessen Einschub- und Schweißstellung beweglich sein. Entsprechend bewegt sich auch das Verschiebegehäuse.

Es sind verschiedene Arten denkbar, das Verschiebegehäuse relativ zum Antriebsgehäuse zu bewegen. Um eine kompakte Schweißzange zu erhalten und gleichzeitig die auftretenden Kräfte günstig in das Antriebsgehäuse einleiten zu können, kann das Verschiebegehäuse direkt am Antriebsgehäuse über wenigstens eine Linearführung, insbesondere Gleitführung beweglich gelagert sein. Dadurch sind andere Lagerungen oder Führungen getrennt vom Antriebsgehäuse für das Verschiebegehäuse nicht notwendig, wodurch der gesamte Aufbau der Schweißzange vereinfacht und kompakter ist. Die Lagerung des Verschiebehäuses kann allerdings auch an einem anderen Teil der Schweißzange erfolgen.

Ein einfaches Ausführungsbeispiel einer solchen Linear- oder Gleitführung kann darin gesehen werden, dass die Führung wenigstens eine Führungsschiene und zumindest einen Laufwagen aufweist, welche relativ zueinander beweglich sind.

Führungsschiene und Laufwagen können dabei jeweils entweder dem Antriebsgehäuse beziehungsweise dem anderen Teil der Schweißzange oder dem Verschiebegehäuse zugeordnet sein. Um insbesondere bei der Montage die Zuordnung von Führungsschiene und Laufwagen zu vereinfachen, kann die Führungsschiene am Verschiebegehäuse und der Laufwagen am Antriebsgehäuse insbesondere jeweils lösbar befestigt sein. Die folgenden Ausführungen zu Linear- oder Gleitführung gelten analog auch für deren Anordnung zwischen anderem Teil der Schweißzange und Verschiebegehäuse.

Da sich das Verschiebegehäuse relativ zum Antriebsgehäuse bewegt, kann der Laufwagen am Antriebsgehäuse unverschieblich fixiert sein, so dass die Führungsschiene sich zusammen mit dem Verschiebegehäuse im Laufwagen verschieben lässt.

Um die Stabilität zwischen Verschiebegehäuse und Antriebsgehäuse zu erhöhen und eine hohe Genauigkeit bei der Verstellung des ersten Schweißzangenarms zu gewährleisten, können zumindest zwei Laufwagen in Verschieberichtung der Führungsschiene beabstandet zueinander angeordnet sein. Diese Laufwagen können insbesondere näher an dem Ende des Antriebsgehäuses angeordnet sein, von dem sich der erste Schweißzangenarm erstreckt.

Um eine sogenannte Lebensdauerschmierung für Führungsschiene und Laufwagen zu ermöglichen, kann der Laufwagen ein Schmiermitteldepot aufweisen oder ein solches kann dem Laufwagen zugeordnet sein.

Zur weiteren Stabilisierung der Verbindung zwischen Verschiebegehäuse und Antriebsgehäuse ist es möglich, beispielsweise drei, vier oder mehr Führungsschienen und eine entsprechende Anzahl von Laufwagen vorzusehen, die entsprechend zwischen den Gehäusen angeordnet und miteinander in gleitendem Kontakt sind.

Ein einfach aufgebautes Verschiebegehäuse kann darin gesehen werden, dass dieses zwei im Wesentlichen symmetrisch angeordnete, sich in Verschieberichtung erstreckende Gehäusehälften aufweist, welche zumindest an ihren Enden in Verschieberichtung durch eine vordere und/oder hintere Stirnplatte insbesondere lösbar miteinander verbunden sind. Die Verbindung von Stirnplatten und Gehäusehälften kann beispielsweise durch Schrauben oder dergleichen erfolgen. Es besteht ebenfalls die Möglichkeit, dass zumindest eine der Stirnplatten einteilig mit den Gehäusehälften ausgebildet ist. Durch die Verwendung solcher Gehäusehälften können unterschiedliche Wärmeausdehnungen von Antriebsgehäuse und Verschiebegehäuse leichter kompensiert werden.

Durch die im Wesentlichen symmetrische Anordnung der Gehäusehälften, können diese denselben Aufbau aufweisen, so dass insgesamt die Herstellung der Gehäusehälften vereinfacht ist. Außerdem können die Gehäusehälften beliebig miteinander ausgetauscht oder kombiniert werden.

Um das Antriebsgehäuse in größerem Umfang durch das Verschiebehäuse abzudecken, können die Gehäusehälften in etwa C-förmig ausgebildet sein und zwischen zwei aufeinander zuweisenden oberen Enden der Gehäusehälften kann ein Abdeckblech angeordnet sein. Durch Zusammenbau der Gehäusehälften mittels der Stirnplatten und Anordnen des Abdeckbleches ergibt sich so ein im Wesentlichen ebenfalls C-förmiges Verschiebegehäuse, das zumindest teilweise das Antriebsgehäuse umgibt. Es besteht ebenfalls die Möglichkeit ein einteiliges im Wesentlichen C- oder U-förmiges Verschiebegehäuse zu verwenden.

Günstig kann es sein, an jeder Gehäusehälfte zwei Führungsschienen vorzusehen, wobei eine entsprechende Anzahl von Laufwagen außen auf dem Antriebsgehäuse angeordnet sind.

Zur vereinfachten Anordnung des Abdeckbleches ist es ausreichend, wenn Einstecknuten zur umlaufenden Halterung des Abdeckblechs in den oberen Enden der Gehäusehälften und aneinander zuweisenden Innenseiten der Stirnplatten ausgebildet sind. Dadurch wird das Abdeckblech einfach mit seinem entsprechenden Rand in die Einstecknuten eingesteckt und ist dort nach Fixierung der Gehäusehälften mittels der Stirnplatten sicher gehalten.

Um die Führungsschienen zur genauen Führung des ersten Schweißzangenarms zwischen Einschub- und Schweißstellung ausrichten zu können, kann jede Gehäusehälfte auf ihrer Innenseite zwei in Verschieberichtung verlaufende Schienenvertiefungen zumindest zum Einsetzen von einem unteren Ende der entsprechenden Führungsschienen aufweisen.

Es besteht ebenfalls die Möglichkeit, dass die Führungsschienen einteilig mit den Gehäusehälften ausgebildet sind.

Zur Befestigung der Führungsschiene in der Schienenvertiefung sind unterschiedliche Möglichkeiten denkbar. Die Führungsschiene könnte beispielsweise in die Schienenvertiefung eingesetzt und dann angeschweißt werden. Konstruktiv einfacher und für den Austausch der Führungsschiene besser geeignet ist allerdings ein Ausführungsbeispiel, bei dem die Führungsschiene in der zugehörigen Schienenvertiefung lösbar und insbesondere durch Verschrauben befestigt ist. Eine entsprechende Verschraubung kann von der Außenseite der zugehörigen Gehäusehälfte beziehungsweise dem Verschiebegehäuse her erfolgen, so dass die Führungsschienen beim Anschrauben in die Schienenvertiefungen hineingezogen werden.

Um die Führungsschienen nicht nur kraftschlüssig, sondern auch formschlüssig in den entsprechenden Schienenvertiefungen zu halten, kann ein Fixierschlitz sich in Höhenrichtung der Führungsschiene in der Gehäusehälfte erstrecken, der entlang der Schienenvertiefungen verläuft und in diese mündet oder benachbart zu dieser angeordnet ist. Um dabei durch elastische Verformung der Gehäusehälfte mittels des Fixierschlitzes die Führungsschiene formschlüssig in der Schienenvertiefung zu fixieren, sind eine Anzahl quer zum Fixierschlitz verlaufender Klemmbohrungen zum Einschrauben entsprechender Klemmschrauben in jeder Gehäusehälfte ausgebildet. Werden die entsprechenden Klemmschrauben in die Klemmbohrungen eingeschraubt, wird der Fixierschlitz durch elastische Deformation der Gehäusehälfte zusammengepresst und damit die Schienenvertiefung quer zur Führungsschiene und zur formschlüssigen Halterung der Fü hrungsschiene verengt.

Eine weitere Möglichkeit zur ergänzenden formschlüssigen Halterung der Führungsschienen kann darin gesehen werden, dass die Schienenvertiefung zwei mit unterschiedlichen Tiefen ausgebildete, aneinander angrenzende Vertiefungsabschnitte aufweist, wobei im ersten Vertiefungsabschnitt mit geringerer Tiefe das untere Ende der Führungsschiene und in dem zweiten Vertiefungsabschnitt mit größerer Tiefe eine Druckleiste angeordnet ist, welche die Führungsschiene innerhalb der Schienenvertiefung relativ zu einer Schienenreferenzkante insbesondere lösbar fixiert. Das heißt, durch die Druckleiste wird im Wesentlichen eine in ihrer Breite in gewissen Maßen variable Schienenvertiefung gebildet, wobei die Führungsschiene einseitig durch die Schienenreferenzkante und auf der anderen Seite durch die Druckleiste fixiert ist.

Es besteht die Möglichkeit, dass die Schienenreferenzkante durch eine Stufenkante zwischen den beiden Vertiefungsabschnitten und/oder durch eine der Druckleiste relativ zur Führungsschiene gegenüberliegende Randkante der Schienenvertiefung gebildet ist.

Um die Druckleiste in einfacher Weise in dem zweiten Vertiefungsabschnitt anordnen zu können, kann die Druckleiste lösbar innerhalb des zweiten Vertiefungsabsch nitt befestigt und in Richtung zur Schienenreferenzkante kraftbeaufschlagbar sein.

Bei einem einfachen Ausführungsbeispiel kann die Kraftbeaufschlagung der Druckleiste durch seitlich angeordnete Schrauben und insbesondere Madenschrauben erfolgen.

Die Führung des Verschiebegehäuses relativ zum Antriebsgehäuse kann in ihrer Genauigkeit verfeinert werden, wenn beispielsweise die Laufwagen gegen eine außen am Antriebsgehäuse ausgebildete, sich in Verschieberichtung erstreckende Wagenreferenzkante andrückbar sind.

Das Andrücken kann analog zur Führungsschiene erfolgen, indem beispielsweise Schrauben und insbesondere Madenschrauben vorgesehen sind.

Erfindungsgemäß besteht die Möglichkeit, innerhalb des Antriebsgehäuses eine Antriebseinrichtung zu verwenden, wie sie beispielsweise in der DE 20 201 734 des gleichen Anmelders offenbart ist. Eine solche Antriebseinrichtung weist als mechanische Verstelleinrichtung in Verschieberichtung einen Gewindetrieb mit Gewindespindel und Gewindemutter auf. Die Gewindemutter ist dabei drehbar, aber axial fixiert und die Gewindespindel ist drehfest, aber axial verstellbar angeordnet. Um mittels der Gewindespindel die als Halteeinrichtung ausgebildete vordere Stirnwand des Verschiebegehäuses in einfacher Weise zum Verstellen des ersten Schweißzangenarms zwischen Einschub- und Schweißstellung zu verschieben, kann die Gewindespindel mit ihrem Ausschubende in einer auf der Innenseite der vorderen Stirnplatte ausgebildete Vertiefung insbesondere drehfest eingreifen und dort mit der vorderen Stirnplatte lösbar befestigt sein.

Eine direkte Verbindung von erstem Schweißzangenarm und beispielsweise Gewindespindel ist in diesem Zusammenhang nicht notwendig, stattdessen kann der erste Schweißzangenarm an der der Innenseite gegenüberliegenden Außenseite der vorderen Stirnplatte insbesondere lösbar befestigt sein.

Um ein Eindringen von Schmutz oder dergleichen zwischen Antriebsgehäuse und Verschiebegehäuse auch im Bereich von unteren Enden der Gehäusehälften zu vermeiden, können Abdeckbleche an unteren Enden der Gehäusehälften in Richtung Antrieb sgehäuse vorstehen.

Wird die Schweißzange durch eine entsprechende Handhabeeinrichtung innerhalb des Raums bewegt, so kann sie in Stellungen angeordnet sein, in denen nach Ausschalten der entsprechenden Antriebseinrichtung der erste Schweißzangenarm und ebenfalls das Verschiebegehäuse sich selbsttätig aufgrund der wirkenden Schwerkraft bewegen. Um dies aus Gründen des Unfallschutzes zu vermeiden, kann die Antriebseinrichtung eine insbesondere magnetisch arbeitende Bremseinrichtung aufweisen, die bei Abschalten der Antriebseinrichtung ein Drehen der Gewindemutter und ein Ausfahren der Gewindespindel unterbindet.

Um eine Reibung zwischen Führungsschiene und Laufwagen so gering wie möglich zu gestalten, kann der Laufwagen umlaufende Rollkörper wie Kugeln oder dergleichen zur Reibungsverminderung aufweisen. Entlang dieser Rollkörper wird sich dann in an sich bekannter Weise die Führungsschiene bei Bewegung des Verschiebegehäuses bewegen.

Um das Verschiebegehäuse in Verschieberichtung so kurz wie möglich gestalten zu können, kann die hintere Stirnplatte im Wesentlichen umgekehrt U-förmig sein und mit ihrer U-Öffnung teilweise das Antriebsgehäuse umgreifen. Auf diese Weise ist es nicht notwendig, dass das Verschiebegehäuse mit einer so großen Länge in Verschieberichtung ausgebildet ist, die gewährleistet, dass das Antriebsgehäuse unabhängig von der Bewegung des Verschiebegehäuses immer von diesem zumindest teilweise umgeben ist.

Um je nach Anordnung der Schweißzange und verfügbarem Raum außerhalb der Schweißzange in einfacher Weise eine entsprechende Versorgung insbesondere der Antriebseinrichtung und deren Steuerung zu ermöglichen, kann das Antriebsgehäuse an einem dem ersten Schweißzangenarm abgewandten Ende, einen lösbaren hinteren Gehäuseabschnitt mit elektrischen Zuleitungen und/oder einer Steuerelektronik und/oder einem Drehzahlgeber oder dergleichen aufweisen, welcher hintere Gehäuseabschnitt in unterschiedlichen Drehstellungen relativ zum übrigen Antriebsgehäuse anordbar und befestigbar ist. Durch die unterschiedlichen Drehstellungen sind insbesondere die elektrischen Zuleitungen von unterschiedlichen Seiten an die Schweißzange heranführbar.

Um das Antriebsgehäuse in einfacher und sicherer Weise befestigen zu können, kann das Antriebsgehäuse seitlich vorstehende Befestigungsflansche zur lösbaren Befestigung an einer Grundplatte aufweisen. Die lösbare Befestigung kann durch entsprechende Schrauben oder dergleichen erfolgen. Diese Grundplatte kann der andere Teil der Schweißzange sein, zwischen welchem und dem Verschiebegehäuse die Linear-/Gleitführung(en) vorgesehen ist (sind), siehe die obigen Ausführungen.

Die Grundplatte kann Teil der Schweißzange sein, mit dem diese an beispielsweise einer Handhabungseinrichtung oder dergleichen befestigt wird. Die Grundplatte kann ebenfalls Teil der Handhabungseinrichtung sein.

Ist die Grundplatte Teil der Schweißzange, kann diese mit einer entsprechenden Handhabungseinrichtung direkt oder indirekt verbindbar sein.

Bei einer indirekten Verbindung mit der Handhabungseinrichtung kann zwischen dieser und der Grundplatte eine Zangenausgleichseinrichtung angeordnet sein. Eine solche Zangenausgleichseinrichtung dient beispielsweise zur räumlichen Ausrichtung der Schweißzange oder zumindest des zweiten Schweißzangenarms.

Um eine entsprechende Ausrichtung zu ermöglichen, kann die Zangenausgleichseinrichtung eine Verstelleinrichtung für den zweiten Schweißzangenarm und/oder das Antriebsgehäuse beziehungsweise die Grundplatte aufweisen.

Bei einem einfachen Ausführungsbeispiel kann die Verstelleinrichtung eine Verschiebeeinrichtung zwischen insbesondere Grundplatte und einem mit der Handhabungseinrichtung verbindbaren Grundrahmen und eine zugeordnete Antriebseinrichtung aufweisen. Die Antriebseinrichtung kann analog zur Antriebseinrichtung innerhalb des Antriebsgehäuses aufgebaut sein.

Ebenfalls analog zu den Gleitführungen zwischen Verschiebegehäuse und Antriebsgehäuse, kann auch die Verschiebeeinrichtung der Verstelleinrichtung zumindest zwei Führungsschienen und diesen zugeordnete Laufwagen aufweisen.

In diesem Zusammenhang kann es als vorteilhaft betrachtet werden, wenn die Führungsschienen am Grundrahmen lösbar fixiert sind und die Laufwagen entlang der Führungsschienen beweglich sind, wobei diese an der Grundplatte lösbar fixiert sind. Das heißt, die Anordnung von fixiertem und verschiebbarem Teil ist umgekehrt zur Anordnung zwischen Verschiebegehäuse und Antriebsgehäuse.

Wie bereits vorangehend erwähnt, kann es als günstig betrachtet werden, wenn zu mindest jeweils zwei Laufwagen jeder Führungsschiene zugeordnet sind.

Laufwagen und Führungsschienen können wie bereits oben ausgeführt, kraftschlüssig an den entsprechenden Teilen befestigt werden, wobei es weiterhin als günstig betrachtet werden kann, wenn Laufwagen und/oder Führungsschienen an Grundplatte beziehungsweise Grundrahmen relativ zu Referenzkanten befestigt sind, so dass sich wie ebenfalls oben ausgeführt, zusätzlich eine formschlüssige Fixierung ergibt.

Um die zweite Schweißzange in diesem Zusammenhang einfach befestigen zu können, kann diese an einer relativ zum Antriebsgehäuse abgewandten Unterseite der Grundplatte an ihrem Befestigungsende lösbar befestigt sein. Dadurch ist auch der zweite Schweißzangenarm einfach montierbar oder demontierbar.

Um insgesamt eine Schweißzange mit geringen Abmessungen zu erhalten, die äußerst kompakt ausgebildet ist, können Antriebsgehäuse mit aufgesetztem Verschiebegehäuse, Grundplatte, Zangenausgleichseinrichtung und Grundrahmen im Wesentlichen übereinander angeordnet und in Verschieberichtung und/oder in Richtung quer zur Verschieberichtung im Wesentlichen gleiche Abmessungen aufweisen. Dadurch steht beispielsweise vom Antriebsgehäuse oder der Grundplatte kein Teil der Schweißzange vor, wodurch die Anordnung der Schweißzange in einem begrenzten Raum vereinfacht ist und gleichzeitig mögliche Verletzungen durch solche vorstehenden Teile der Schweißzange vermieden sind.

Um ein Eindringen von Schmutz oder dergleichen bei Bewegung des Verschiebegehäuses zur Verstellung des ersten Schweißzangenarms zwischen Einschub- in Schweißstellung zu vermeiden, kann ein Faltenbalg der Antriebseinrichtung mit einem Ende an der Innenseite der vorderen Stirnplatte und mit seinem anderen Ende insbesondere an einem Absatz innerhalb des Antriebsgehäuses lösbar befestigt sein. Dabei umgibt der Faltenbalg die Gewindemutter und die ausfahrende Gewindespindel.

Um die über das selbsttragende Verschiebegehäuse in die Schweißzange eingeleiteten Kräfte gut aufnehmen und ableiten zu können, kann zwischen den Stirnplatten und den Gehäusehälften und/oder der Grundplatte und dem Antriebsgehäuse oder dem Verschiebegehäuse eine formschlüssige Verbindung insbesondere durch Passstifte, Passfedern, Folie mit harten Teilchen oder dergleichen gebildet sein. Die Passstifte, -federn würden sich in diesem Zusammenhang zwischen den Stirnplatten und den Gehäusehälften oder dem Antriebs-/Verschiebegehäuse beziehungsweise dessem Befestigungsflansch und der Grundplatte erstrecken. Die Folie mit harten Teilchen kann als dünne Folie mit beidseitig angeordneten harten Teilchen aus Diamant, Korund oder dergleichen ausgebildet sein. Die harten Teilchen werden bei Befestigen der entsprechenden Teile, beispielsweise Stirnplatten und Gehäusehälften, in die jeweiligen Oberflächen der Teile eingedrückt und verkrallen sich dort unter Herstellung des entsprechenden Formschlusses.

Im Folgenden wird ein vorteilhaftes Ausführungsbeispiel der Erfindung anhand der in der Zeichnung beigefügten Figuren näher erläutert.

Es zeigen:
- Figur 1: eine Seitenansicht eines Ausführungsbeispiels der erfindungsgemäßen Schweißzange;
- Figur 2: einen Längsschnitt durch die Schweißzange nach Figur 1;
- Figur 3: einen Schnitt entlang der Linie III-III aus Figur 2;
- Figur 4: einen Schnitt entlang der Linie IV-IV aus Figur 1, und
- Figur 5: einen Schnitt analog zu Figur 4 durch ein weiteres Ausführungsbeispiel.

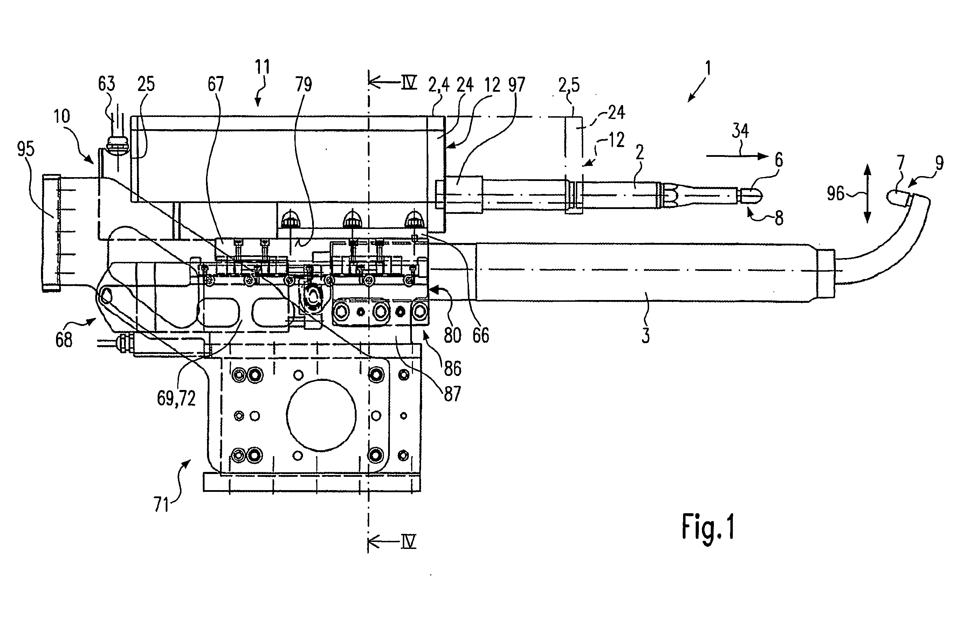

In der Seitenansicht nach Figur 1 ist ein Ausführungsbeispiel einer Schweißzange 1 mit einem ersten Schweißzangenarm 2 und einem zweiten Schweißzangenarm 3 dargestellt. Eine solche Schweißzange wird aufgrund der Anordnung der Schweißzangenarme allgemein als C-Schweißzange bezeichnet.

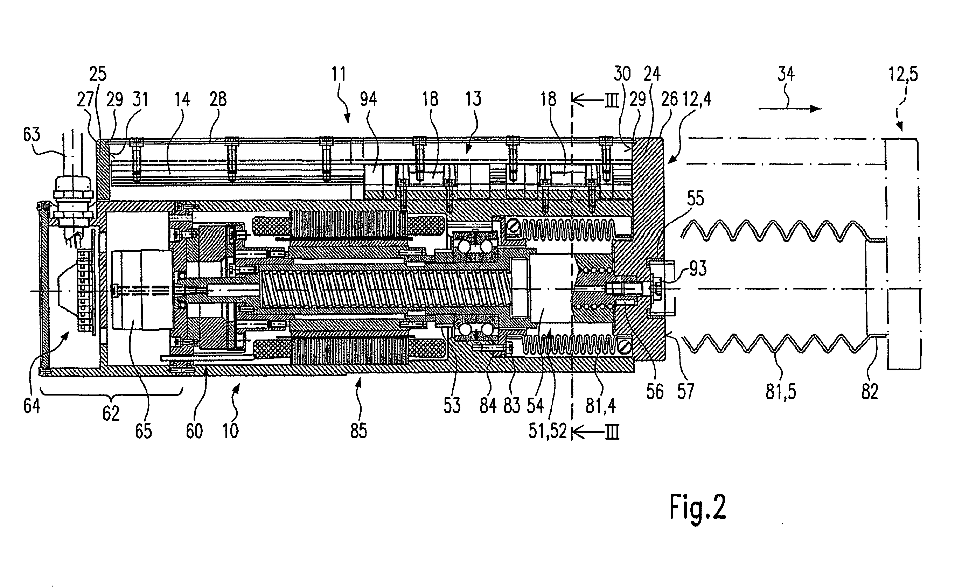

Mittels einer Antriebseinrichtung 85, siehe auch Figur 2, ist der erste Schweißzangenarm 2 in Verschieberichtung 34 verschiebbar zwischen einer Einschubstellung 4 und einer Schweißstellung 5. Die Schweißstellung 5 ist in Figur 1 gestrichelt dargestellt, wobei eine Wiedergabe des ersten Schweißzangenarms 2 für diese Stellung zur Vereinfachung weggelassen wurde.

An Enden 8 und 9 der Schweißzangenarme 2 und 3 sind Schweißkontakte 6 und 7 angebracht, die im Wesentlichen einander zuweisen. In Schweißstellung 5 des ersten Schweißzangenarms 2 sind die Schweißkontakte 6 und 7 so weit angenähert, dass ein zwischen ihnen befindliches Werkstück, wie beispielsweise Bleche oder dergleichen, aneinander gedrückt und miteinander durch Setzen eines Schweißpunkts verschweißbar sind.

Um Querkräfte in einer durch die Auslenkrichtungen 96 definierten Vertikalebene auf die Schweißzangenarme 2 und 3 in Schweißstellung 5 zu vermeiden, wird einerseits der erste Schweißzangenarm 2 so genau in die Schweißstellung 5 verschoben, dass die entsprechenden Schweißkontakte 6 und 7 ohne größere Querkräfte in Auslenkrichtungen 96 aufeinander treffen. Die verbleibenden Querkräfte werden andererseits durch ein selbsttragend ausgebildete Verschiebegehäuse 11 aufgenommen und über dessen Verbindung mit dem Antriebsgehäuse 10 oder mit einer Grundplatte 67 in dieses und über dieses in eine Handhabeeinrichtung oder dergleichen eingeleitet.

Der erste Schweißzangenarm 2 ist von einer Halteeinrichtung 12 gehalten, wobei er an dieser mit seinem Befestigungsende 97 lösbar befestigt ist. Die Halteeinrichtung 12 ist Teil des Verschiebegehäuses 11 und insbesondere dessen vordere Stirnplatte 24. Die Halteeinrichtung 12 wird zusammen mit dem Verschiebegehäuse 11 und mit dem ersten Schweißzangenarm 2 zwischen dessen Einschubstellung 4 und Schweißstellung 5 verschoben.

Das Verschiebegehäuse 11 umgreift zumindest teilweise ein Antriebsgehäuse 10, das die Antriebseinrichtung 85 enthält. Das Verschiebegehäuse 11 ist selbsttragend ausgebildet und an dem Antriebsgehäuse 10 in Verschieberichtung 34 gleitverschieblich gelagert.

Mittels eines seitlich abstehenden Befestigungsflansches 66 ist das Antriebsgehäuse 10 an einem unteren Ende an der Grundplatte 67 lösbar befestigt. Unterhalb dieser Grundplatte 67 ist eine Zangenausgleichseinrichtung 68 angeordnet. Diese dient zur Verstellung des zweiten Schweißzangenarms 3. Die Zangenausgleichseinrichtung 68 weist zumindest eine Verstelleinrichtung 69 für den zweiten Schweißzangenarm sowie eine entsprechende Antriebseinrichtung 72 auf. Die Antriebseinrichtung 72 ist analog zur Antriebseinrichtung 85 aufgebaut.

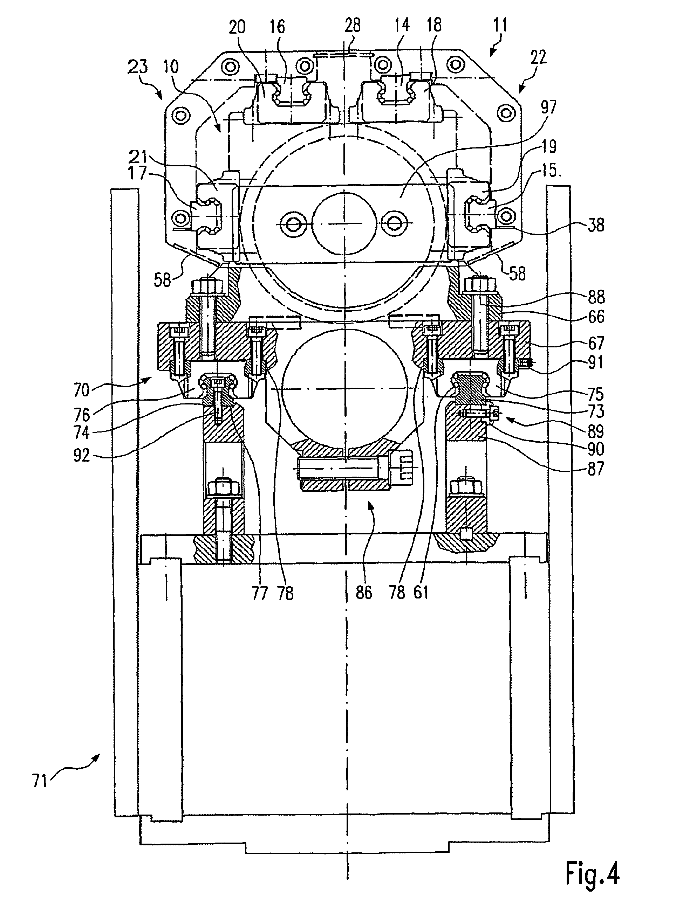

Die Grundplatte 67 ist an ihrer Unterseite 79, siehe auch Figur 4, mit Trägern 87 als Teil eines Grundrahmens 71 lösbar und gleitverschieblich verbunden. Die Gleitverschiebung erfolgt entsprechend durch Betätigung der Zangenausgleichseinrichtung 68. Der Grundrahmen 71, siehe auch Figur 4, weist weiterhin einen Anschlussflansch 95 auf, der zur Befestigung des Grundrahmens 71 und damit der Schweißzange 1 an einer nicht dargestellten Handhabungseinrichtung dient.

Bezüglich des zweiten Schweißzangenarms 3 ist noch zu beachten, dass dieser an seinem Befestigungsende 80 in einer entsprechenden Schweißzangenarmlagerung 86 an der Unterseite der Grundplatte 67 lösbar befestigt ist.

Figur 2 zeigt einen Längsschnitt durch die Schweißzange 1 nach Figur 1.

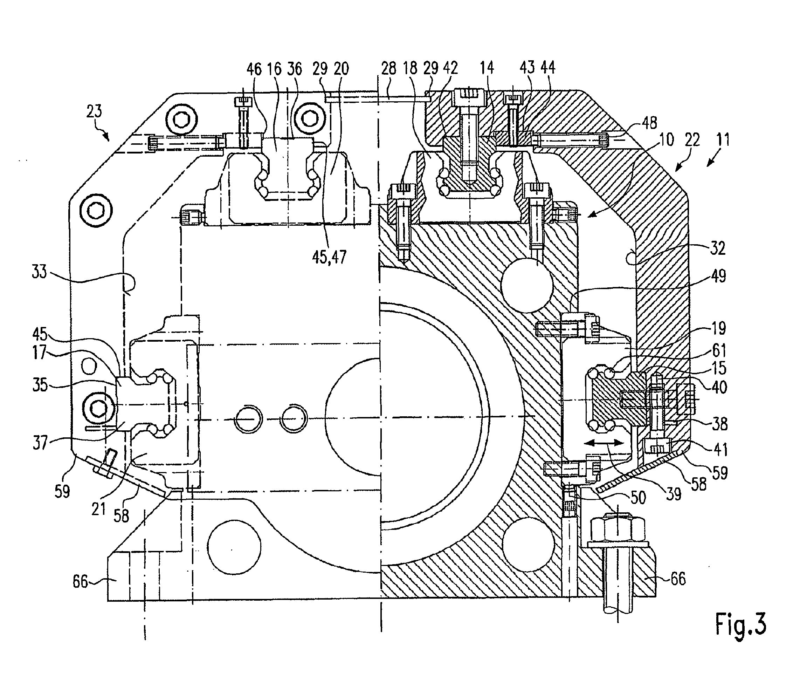

Auf dem Antriebsgehäuse 10 ist das Verschiebegehäuse 11 aufgesetzt, wobei zwischen beiden eine Reihe von Gleitführungen 13 mit einer Mehrzahl von Führungsschienen 14 bis 17 und Laufwagen 18 bis 21 ausgebildet sind, siehe hierzu auch Figur 3. In der Darstellung nach Figur 1 ist eine Führungsschiene 14 mit einem Paar von Laufwagen 18 sichtbar. Die Führungsschiene 14 ist an einer Innenseite des Verschiebegehäuses 11 durch Verschrauben befestigt. Die Laufwagen 18 sind in Verschieberichtung 34 auf einer Außenseite des Antriebsgehäuses 10 durch Verschrauben befestigt. Dabei sind die beiden Laufwagen 18 in einer der vorderen Stirnplatte 24 des Verschiebegehäuses 11 zuweisenden vorderen Hälfte des Antriebsgehäuses 10 angeordnet. Jeder der Laufwagen 18 sowie auch 19 bis 21, kann ein Schmiermitteldepot 94 zur Lebensdauerschmierung aufweisen.

Das Verschiebegehäuse 11 weist an seinen in Verschieberichtung 34 liegenden Enden die vordere Stirnplatte 24 beziehungsweise eine hintere Stirnplatte 25 auf. Diese sind lösbar durch Verschrauben mit dem Verschiebegehäuse 11 verbunden. Wie bereits ausgeführt, bildet die vordere Stirnplatte 24 die Halteeinrichtung 12 für den ersten Schweißzangenarm 2, wobei diese Stirnplatte ebenfalls entsprechend in Verschieberichtung 34 zwischen Einschubstellung 4 und Schweißstellung 5 des ersten Schweißzangenarms 2 verschiebbar ist. Auf Innenseiten 30, 31 der Stirnplatten 24, 25 sind an deren oberen Enden 26, 27 Einstecknuten 29 ausgebildet, in die eine entsprechende Randkante eines Abdeckblechs 28 eingesteckt ist, siehe auch Figur 3.

Die hintere Stirnplatte 25 ist im Wesentlichen umgekehrt U-förmig, so dass sie, siehe auch Figur 1, von oben teilweise das Antriebsgehäuse 10 umgreift. Die vordere Stirnplatte 24 deckt im Wesentlichen ein vorderes Ende des Antriebsgehäuses 10 ab. Innerhalb des Antriebsgehäuses 10 ist die Antriebseinrichtung 85 angeordnet, die zumindest einen Gewindetrieb 52 als mechanische Verstelleinrichtung 51 aufweist. Der Gewindetrieb 52 umfasst eine Gewindespindel 53 und eine Gewindemutter 54. Die Gewindespindel 53 ist drehfest, aber axial in Verschieberichtung 34 verschiebbar gelagert, während die Gewindemutter 54 drehbar, aber axial unverschieblich gelagert ist. Die Drehung der Gewindemutter 54 erfolgt mittels eines elektromagnetischen Motors der Antriebseinrichtung 85. Die entsprechende Antriebseinrichtung ist in der DE 202 01 734 im Detail beschrieben.

Die Gewindespindel 53 ist mit ihrem dem ersten Schweißzangenarm 2 zuweisenden Ausschubende 55 in einer auf der Innenseite 30 der vorderen Stirnplatte 24 ausgebildeten Vertiefung 56 insbesondere drehfest eingesetzt und dort mittels einer durch die Stirnplatte 24 geschraubten Befestigungsschraube 93 befestigt. Auf einer Außenseite 57 der vorderen Stirnplatte 24 ist das Befestigungsende 97 des ersten Schweißzangenarms 2, siehe auch Figur 1, beispielsweise durch Verschrauben lösbar befestigt.

In Figur 2 ist gestrichelt die vordere Stirnplatte 24 in entsprechender Schweißstellung 5 angeordnet, siehe auch Figur 1, wobei zwischen dieser und einem in dem Antriebsgehäuse 10 ausgebildeten Absatz 84 ein Faltenbalg 81 angeordnet ist. Der Faltenbalg 81 ist mit seinem vorderen Ende 82 auf der Innenseite 30 der vorderen Stirnplatte 24 und mit seinem hinteren Ende 83 an dem Absatz 84 lösbar befestigt. Dabei umgibt der Faltenbalg 81 sowohl die Gewindemutter 54 als auch die ausgeschobene Gewindespindel 53. In entsprechender Schweißstellung 5 ist der Faltenbalg auseinandergezogen, siehe die entsprechend gekennzeichnete Stellung des Faltenbalgs 81 nach Figur 2.

Die Antriebseinrichtung 85 weist weiterhin eine Bremseinrichtung 60 auf, die als magnetische Bremse mit Elektromagneten und Permanentmagneten ausgebildet ist. Bei fehlender elektrischer Versorgung der Bremseinrichtung 60 ist der Permanentmagnet drehfest durch die entsprechenden magnetischen Kräfte gehalten, so dass keine Drehung der Gewindemutter 54 und damit ein Ausschieben der Gewindespindel 53 möglich ist. Bei elektrischer Versorgung wird die magnetische Kraft des Permanentmagneten durch den Elektromagneten kompensiert, so dass eine Drehung der Gewindemutter 54 möglich ist.

Das Antriebsgehäuse 10 weist auf seiner der vorderen Stirnplatte 24 abgewandten Rückseite einen hinteren Gehäuseabschnitt 62 auf. Dieser ist in verschiedenen Drehstellungen bezüglich des übrigen Antriebsgehäuses 10 mit diesem befestigbar. Innerhalb des hinteren Gehäuseabschnitts 62 sind beispielsweise eine Steuerelektronik 64 und ein Drehzahlgeber 65 angeordnet. Außerdem sind elektrische Zuleitungen 63 an dem hinteren Gehäuseabschnitt 62 angeordnet.

In Figur 3 ist ein Schnitt entlang der Linie III-III aus Figur 2 dargestellt, wobei zur Vereinfachung einige Einzelheiten insbesondere innerhalb des Antriebsgehäuses 10 weggelassen wurden. Gleiche Bezugszeichen kennzeichnen in dieser Figur wie in allen übrigen Figuren gleiche Teile.

In dem Schnitt nach Figur 3 ist insbesondere die Zweiteilung des Verschiebegehäuses 11 mit Gehäusehälften 22 und 23 erkennbar. Diese Gehäusehälften 22 und 23 sind an ihren in Verschieberichtung 34 liegenden Enden mit den Stirnplatten 24 und 25.lösbar verbunden, siehe die linke Hälfte in Figur 3. Auf Innenseiten 32, 33 der Gehäusehälften 22, 23 sind im Wesentlichen an deren oberen und unteren Enden Führungsschienen 14, 15 und entsprechend 16, 17 angeordnet. Der Aufbau der Gehäusehälften 22, 23 mit entsprechenden Einrichtungen ist gleichartig, so dass die Beschreibung des Aufbaus einer Gehäusehälfte 22 ausreichend ist.

Im Bereich der Führungsschienen 14 bis 17 sind entsprechende Schienenvertiefungen 35, 36 angeordnet, in denen zumindest untere Enden 37 der Führungsschienen 14 bis 17 eingesetzt sind. Die lösbare Befestigung der Führungsschienen in den Schienenvertiefungen 35, 36 erfolgt durch Schrauben. Zur genauen Ausrichtung der Führungsschienen 14 bis 17 erfolgt neben der kraftschlüssigen Befestigung durch die Schrauben ebenfalls eine formschlüssige Befestigung.

Bei einem ersten Ausführungsbeispiel einer solchen formschlüssigen Befestigung ist bei der Schienenvertiefung 35 ein Fixierschlitz 38 vorgesehen. Dieser verläuft in Höhenrichtung 39 der Führungsschienen 15, 17 innerhalb der entsprechenden Gehäusehälfte und mündet in die entsprechende Schienenvertiefung 35. Quer zum Fixierschlitz 38 erstrecken sich innerhalb der Gehäusehälften 22, 23 Klemmbohrungen 40, in denen Klemmschrauben 41 einschraubbar sind. Durch entsprechendes Einschrauben der Klemmschrauben 41 in Klemmbohrungen 40 kann mittels des Fixierschlitzes 38 ein entsprechendes unteres Ende 59 der Gehäusehälften 22, 23 in Richtung Führungsschienen 15, 17 elastisch so weit verformt werden, dass die Führungsschienen fest an eine entsprechende Schienenreferenzkante 45 angedrückt sind.

Bei einem weiteren Ausführungsbeispiel für einen solchen Formschluss, siehe die Schienenvertiefungen 36, weisen diese einen ersten Vertiefungsabschnitt 42 und einen zweiten Vertiefungsabschnitt 43 mit unterschiedlichen Tiefen auf. In dem ersten Vertiefungsabschnitt 42 mit geringerer Tiefe ist das entsprechende untere Ende 37 der Führungsschiene 14, 16 angeordnet. In den zweiten Vertiefungsabschnitt 43 mit größerer Tiefe ist eine sich entlang der entsprechenden Führungsschiene erstreckende Druckleiste 44 eingelegt. Die Druckleiste ist entsprechend durch Verschrauben lösbar in der Schienenvertiefung 36 befestigt. Zur seitlichen Kraftbeaufschlagung der Druckleiste 44 sind Schrauben und insbesondere Madenschrauben 48 vorgesehen, welche die Druckleiste 44 in Richtung unteres Ende 37 der zugehörigen Führungsschiene 14, 16 drücken und damit die Führungsschiene an eine entsprechende Randkante 47 der Schienenvertiefung 36 als Schienenreferenzkante 45 anpressen. Die zwischen den verschiedenen Vertiefungsabschnitten 42, 43 gebildete Stufenkante 46 ist bei dem dargestellten Ausführungsbeispiel keine Schienenreferenzkante 45, sondern ist mit geringem Abstand zur Druckleiste 44 bei Anordnung der Führungsschienen 14, 16 in Referenzstellung angeordnet.

Zwischen den entsprechenden Führungsschienen 14, 17 und den zugehörigen Laufwagen 18, 21 sind Rollkörper 61 zur Reibungsverminderung angeordnet, die in den Laufwagen 18, 21 umlaufen. Die Laufwagen 18 bis 21 sind auf der Außenseite des Antriebsgehäuses 10 lösbar durch insbesondere Verschrauben befestigt. Auch die Laufwagen 18 bis 21 sind neben der kraftschlüssigen Anordnung ebenfalls formschlüssig angeordnet, wobei sie mittels Schrauben, insbesondere Madenschrauben 50 gegen zugehörige Wagenreferenzkanten 49 gepresst werden. Entsprechende Schrauben sind für alle Laufwagen 18, 21 vorgesehen, wobei nochmals darauf hingewiesen wird, dass für jede der Führungsschienen 14, 17 beim dargestellten Ausführungsbeispiel jeweils ein Paar von Laufwagen vorgesehen ist.

An den unteren Enden 59 der Gehäusehälften 22, 23 sind noch schräg nach unten und in Richtung Antriebsgehäuse 10 vorstehende Abdeckbleche 58 angeordnet. Diese verhindern ein Eindringen von Schmutz in den Freiraum zwischen Antriebsgehäuse 10 und Verschiebegehäuse 11.

Die Gehäusehälften 22, 23 sind in etwa C-förmig ausgebildet, wobei zwischen den oberen einander zuweisenden Enden der Gehäusehälften 22 das Abdeckblech 28 angeordnet ist. Dieses ist mit seinen entsprechenden Randkanten in dort ausgebildete Einstecknuten 29, siehe auch Figur 2, eingesteckt.

In Figur 4 ist ein Schnitt entlang der Linie IV-IV aus Figur 1 dargestellt, wobei einige Einzelheiten zur Vereinfachung insbesondere im Bereich von Verschiebegehäuse 11 und Antriebsgehäuse 10 weggelassen wurden.

Bezüglich der Beschreibung letzterer wird auf die Figuren 3 und 2 verwiesen.

Das Antriebsgehäuse 10 weist an seinem unteren Ende Befestigungsflansche 66 auf, die nach außen abstehen. Diese dienen sowohl zum Aufstellen auf die Grundplatte 67 als auch zur lösbaren Befestigung an dieser mittels Schraubbolzen 88. Die Grundplatte 67 weist auf ihrer Unterseite jeweils zwei Laufwagen 75, 76 auf, die dort mittels entsprechender Schrauben lösbar befestigt sind. Zur Ausrichtung der Laufwagenpaare 75, 76 sind entsprechende Referenzkanten 78 vorgesehen, gegen die die Laufwagen 75, 76 mittels Schrauben, insbesondere Madenschrauben 91 anpressbar sind. Über diese Laufwagen 75, 76 ist die Grundplatte 67 mittels Verstelleinrichtung 69 mit entsprechender Antriebseinrichtung 72, siehe auch Figur 1, entlang des Grundrahmens 71 verschiebbar. Der Grundrahmen 71 weist dabei Träger 87 auf, auf deren Oberseiten entsprechende Führungsschienen 73, 74 angeordnet sind, entlang denen die Laufwagen 75, 76 verschiebbar sind. Die Führungsschienen 73, 74 sind durch entsprechende Schrauben 92 lösbar angeordnet und ebenfalls gegen zugehörige Referenzkanten 77 gepresst. Zur Anpressung dient in diesem Zusammenhang eine Schraube 89 mit Pressscheibe 90, wobei die Pressscheibe durch Einschrauben der Schraube 89 an ein unteres Ende der Führungsschienen 73, 74 gegenüberliegend zur entsprechenden Referenzkante 77 angepresst ist.

Ebenfalls an der Unterseite der Grundplatte 67 ist die Schweißzangenlagerung 86 für das Befestigungsende 80 des zweiten Schweißzangenarms 3 angeordnet.

Zur Vereinfachung nicht weiter dargestellt sind Passstifte, -federn, eine Folie mit harten Teilchen oder dergleichen, die zwischen den Stirnplatten 24, 25 und den Gehäusehälften 22, 23 und/oder zwischen der Grundplatte 67 und dem Antriebsgehäuse 10 beziehungsweise den Befestigungsflanschen 66 angeordnet sind. Diese dienen zur formschlüssigen Verbindung dieser Teile. Die entsprechende Folie weist auf ihren beiden Seiten harte Teilchen aus Korund, Diamant oder dergleichen auf, die beim Befestigen der entsprechenden Teile miteinander in diese eingedrückt werden und sich dort verkrallen.

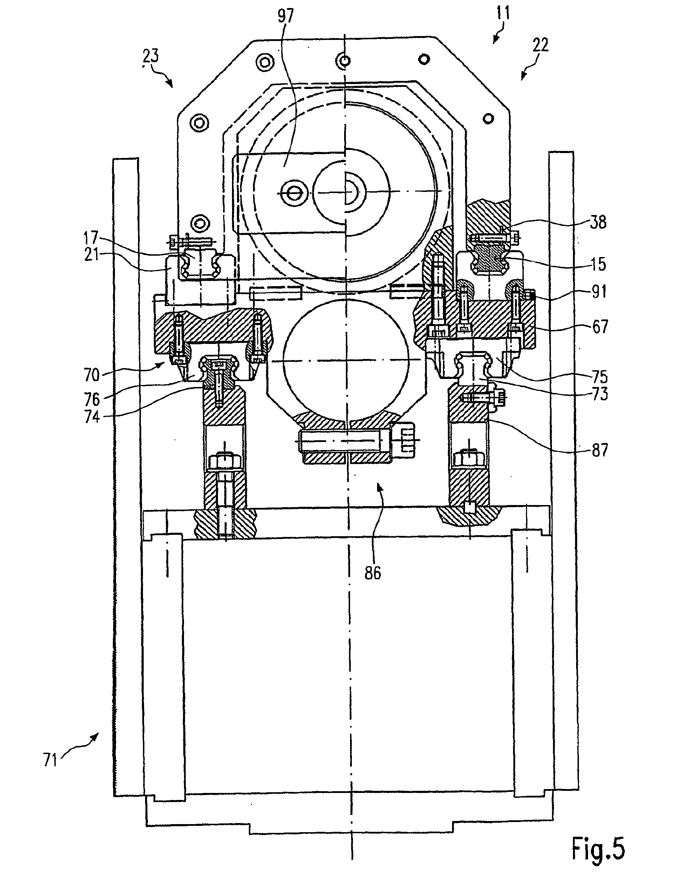

In Figur 5 ist ein Schnitt analog zu Figur 4 durch ein weiteres Ausführungsbeispiel dargestellt. Zur Vereinfachung wird nur auf die entsprechenden Unterschiede zum Ausführungsbeispiel nach Figur 4 verwiesen, wobei gleiche Teile durch gleiche Bezugszeichen gekennzeichnet sind.

Bei dem Ausführungsbeispiel nach Figur 5 ist das Verschiebegehäuse 11 einteilig ausgebildet und über zwei Führungsschienen 15, 17 und entsprechende Laufwagen 19, 21 direkt an der Grundplatte 67 gelagert. Dadurch sind die entsprechenden Gleitführungen nicht mehr zwischen Verschiebegehäuse 11 und Antriebsgehäuse 10, sondern zwischen Verschiebegehäuse 11 und Grundplatte 67 angeordnet. Eine direkte Verbindung zwischen den Gehäusen 10 und 11 ist nicht mehr vorhanden. Bei dem Ausführungsbeispiel nach Figur 5 besteht die Möglichkeit, mehr als zwei Führungswagen 19, 21 für jede der Führungsschienen 14, 17 vorzusehen.

Die Ausrichtung von Führungsschienen und Führungswagen erfolgt analog zu den vorangehenden Ausführungsbeispielen, wobei entsprechend Madenschrauben 91 und Fixierschlitze 38 mit entsprechenden Klemmbohrungen und Klemmschrauben vorgesehen sind.

Die Verbindung zwischen Grundplatte 67 und den übrigen Teilen der Schweißzange 1 erfolgt ebenfalls analog zu den voranführenden Ausführungsbeispielen, siehe die weiteren Gleitführungen zwischen Grundplatte 67 und Grundrahmen 71.

Vordere und hintere Stirnplatte sind bei Figur 5 analog zum vorangehenden Ausführungsbeispiel anordbar, wobei auch hier zwischen den entsprechenden Metallflächen eine Folie mit Diamanten, Korund oder anderen harten Teilchen angeordnet werden kann. Diese Folie mit den beidseitig von ihr vorstehenden harten Teilchen dient zur formschlüssigen Verankerung der miteinander zu verbindenden Teile, wobei die harten Teilchen in die entsprechenden, einander zuweisenden Flächen der Teile eingreifen, hier in die Flächen von Stirnplatten und Flächen an den Enden des übrigen Verschiebegehäuses 11. Statt einer Folie kann auch ein netzartiges dünnes Material verwendet werden, in dem die harten Teilchen so eingebettet sind, dass sie beidseitig vorstehen und/oder beidseitig auf dem dünnen Material angeordnet sind. Es ist selbstverständlich, dass eine solche Folie mit den harten Teilchen auch unabhängig von der Schweißzange zur formschlüssigen Verbindung von einander zuweisenden Flächen entsprechender Werkstücke verwendet werden kann, insbesondere im Zusammenhang mit einer kraftschlüssigen Verbindung mittels Verschrauben oder dergleichen. Dabei ist es nicht notwendig, dass die Flächen planparallel sind, sondern es können auch stufenartige Flächen, wellenförmige Flächen und andere strukturierte Flächen entsprechend mit komplementär dazu ausgebildeten Flächen eines zu verbindenden Werkstücks mit solchen Folien dazwischen formschlüssig miteinander verbunden werden. Ebenso besteht die Möglichkeit, dass die Folie zur Befestigung auf eine Oberfläche eines Werkstücks aufklebbar ist oder auch die harten Teilchen direkt mit gleichmäßiger Dicke auf eine Oberfläche des entsprechenden Werkstücks oder dergleichen direkt beispielsweise durch Verkleben aufgebracht werden.

## Patentansprüche

1. Schweißzange (1) mit zwei relativ zueinander beweglichen Schweißzangenarmen (2, 3), von denen wenigstens ein erster (2) relativ zu einem Antriebsgehäuse (10) zwischen einer Einschub- und einer Schweißstellung (4, 5) verstellbar gelagert ist, in welcher Schweißstellung ein zu verschweißendes Werkstück zwischen im Wesentlichen einander zuweisenden Schweißkontakten (6, 7) an Enden (8, 9) der Schweißzangenarme (2, 3) geklemmt ist,
**dadurch gekennzeichnet,**
**dass** die Schweißzange (1) ein selbsttragendes, entlang des Antriebsgehäuses (10) bewegliches Verschiebegehäuse (11) aufweist, welches eine den ersten Schweißzangenarm (2) außerhalb des Antriebsgehäuses (10) abstützende Halteeinrichtung (12) aufweist.

2. Schweißzange nach Anspruch 1,
**dadurch gekennzeichnet,**
**dass** die Halteeinrichtung (12) zusammen mit dem ersten Schweißzangenarm (2) zwischen dessen Einschub- und Schweißstellung (4, 5) beweglich ist.

3. Schweißzange nach Anspruch 1 oder 2,
**dadurch gekennzeichnet,**
**dass** das Verschiebegehäuse (11) am Antriebsgehäuse (10) und/oder einem anderen Teil der Schweißzange über wenigstens eine Linearführung, insbesondere Gleitführung (13) beweglich gelagert ist.

4. Schweißzange nach einem der vorangehenden Ansprüche,
**dadurch gekennzeichnet,**
**dass** die Gleitführung (13) eine Führungsschiene (14, 15, 16, 17) und zumindest einen Laufwagen (18, 19, 20, 21) aufweist, welche relativ zueinander beweglich sind.

5. Schweißzange nach einem der vorangehenden Ansprüche,
**dadurch gekennzeichnet,**
**dass** die Führungsschiene (14 - 17) am Verschiebegehäuse (11) und der Laufwagen (18 - 21) am Antriebsgehäuse (10) insbesondere jeweils lösbar befestigt sind.

6. Schweißzange nach einem der vorangehenden Ansprüche,
**dadurch gekennzeichnet,**
**dass** der Laufwagen (18 bis 21) am Antriebsgehäuse (10) unverschieblich fixiert ist.

7. Schweißzange nach einem der vorangehenden Ansprüche,
**dadurch gekennzeichnet,**
**dass** zumindest zwei Laufwagen in Verschieberichtung (34) der Führungsschiene (14 - 17) beabstandet zueinander angeordnet sind.

8. Schweißzange nach einem der vorangehenden Ansprüche,
**dadurch gekennzeichnet,**
**dass** der Laufwagen (18 - 21) ein Schmiermitteldepot (94) aufweist.

9. Schweißzange nach einem der vorangehenden Ansprüche,
**dadurch gekennzeichnet,**
**dass** das Verschiebegehäuse (11) zwei im Wesentlichen symmetrisch zueinander angeordnete, sich in Verschieberichtung (34) erstreckende Gehäusehälften (22, 23) aufweist, welche zumindest an ihren Enden durch eine vordere und/oder hintere Stirnplatte (24, 25) lösbar miteinander verbunden sind, wobei die vordere Stirnplatte als Halteeinrichtung (12) ausgebildet ist.

10. Schweißzange nach einem der vorangehenden Ansprüche,
**dadurch gekennzeichnet,**
**dass** die Gehäusehälften (22, 23) in etwa C-förmig ausgebildet sind und zwischen zwei aufeinander zuweisenden oberen Enden (26, 27) der Gehäusehälften (22, 23) ein Abdeckblech (28) angeordnet ist.

11. Schweißzange nach einem der vorangehenden Ansprüche,
**dadurch gekennzeichnet,**
**dass** Einstecknuten (29) zur umlaufenden Halterung des Abdeckblechs (28) in den oberen Enden (26, 27) der Gehäusehälften (22, 23) und in einander zuweisenden Innenseiten (30, 31) der Stirnplatten (24, 25) ausgebildet sind.

12. Schweißzange nach einem der vorangehenden Ansprüche,
**dadurch gekennzeichnet,**
**dass** jede Gehäusehälfte (22, 23) auf ihrer Innenseite (32, 33) zwei in Verschieberichtung (34) verlaufende Schienenvertiefungen (35, 36) zumindest zum Einsetzen von unteren Enden (37) der entsprechenden Führungsschienen (14 - 17) aufweist.

13. Schweißzange nach einem der vorangehenden Ansprüche,
**dadurch gekennzeichnet,**
**dass** die Führungsschienen (14 - 17) in der zugehörigen Schienenvertiefung (35 bis 36) lösbar, insbesondere durch Verschrauben befestigt ist.

14. Schweißzange nach einem der vorangehenden Ansprüche,
**dadurch gekennzeichnet,**
**dass** ein in Höhenrichtung (39) der Führungsschiene (14 - 17) in der Gehäusehälfte (22, 23) ausgebildeter Fixierschlitz entlang der Schienenvertiefung (35, 36) verläuft und in diese mündet oder benachbart zu dieser angeordnet ist und eine Anzahl von quer zum Fixierschlitz (38) verlaufende Klemmbohrungen (40) zum Einschrauben entsprechender Klemmschrauben (41) in der Gehäusehälfte (22, 23) ausgebildet sind.

15. Schweißzange nach einem der vorangehenden Ansprüche,
**dadurch gekennzeichnet,**
**dass** die Schienenvertiefung (35, 36) mit unterschiedlicher Tiefe ausgebildete, an einander angrenzende Vertiefungsabschnitte (42, 43) aufweist, wobei der erste Vertiefungsabschnitt (42) mit geringerer Tiefe das untere Ende (37) der Führungsschiene (14 - 17) aufnimmt und in dem zweiten Vertiefungsabschnitt (43) mit größerer Tiefe eine Druckleiste (44) angeordnet ist, welche die Führungsschiene (14 - 17) innerhalb der Schienenvertiefung (35, 36) relativ zu einer Schienenreferenzkante (45) insbesondere lösbar fixiert.

16. Schweißzange nach einem der vorangehenden Ansprüche,
**dadurch gekennzeichnet,**
**dass** die Schienenreferenzkante (45) durch eine Stufenkante.(46) zwischen den beiden Vertiefungsabschnitten (42, 43) und/oder durch eine der Druckleiste relativ zur Führungsschiene (14 - 17) gegenüberliegende Randkante (47) der Schienenvertiefung (35, 36) gebildet ist.

17. Schweißzange nach einem der vorangehenden Ansprüche,
**dadurch gekennzeichnet,**
**dass** die Druckleiste (44) lösbar innerhalb des zweiten Vertiefungsabschnitts (43) befestigt und insbesondere seitlich in Richtung zur Schienenreferenzkante (45) kraftbeaufschlagbar ist.

18. Schweißzange nach einem der vorangehenden Ansprüche,
**dadurch gekennzeichnet,**
**dass** zur seitlichen Kraftbeaufschlagung der Druckleiste (44) Schrauben und insbesondere Madenschrauben (48) vorgesehen sind.

19. Schweißzange nach einem der vorangehenden Ansprüche,
**dadurch gekennzeichnet,**
**dass** der Laufwagen (18 bis 21) an eine außen am Antriebsgehäuse (10) ausgebildete, sich in Verschieberichtung (34) erstreckende Wagenreferenzkante (49) andrückbar ist.

20. Schweißzange nach einem der vorangehenden Ansprüche,
**dadurch gekennzeichnet,**
**dass** zum Andrücken an die Wagenreferenzkante (49) Schrauben und insbesondere Madenschrauben (50) vorgesehen sind.

21. Schweißzange nach einem der vorangehenden Ansprüche,
**dadurch gekennzeichnet,**
**dass** eine Antriebseinrichtung (85) innerhalb des Antriebsgehäuses (10) als mechanische Verstelleinrichtung (51) in Verschieberichtung (34) einen Gewindetrieb (52) mit Gewindespindel (53) und Gewindemutter (54) aufweist, wobei die Gewindemutter (54) drehbar, aber axial fixiert und die Gewindespindel (53) drehfest, aber axial verstellbar angeordnet sind, welche Gewindespindel (53) mit ihrem Ausschubende (55) in eine auf der Innenseite (30) der vorderen Stirnplatte (24) ausgebildete Vertiefung (56) insbesondere verdrehfest eingreift und an der vorderen Stirnplatte (24) lösbar befestigt ist.

22. Schweißzange nach einem der vorangehenden Ansprüche,
**dadurch gekennzeichnet,**
**dass** der erste Schweißzangenarm (2) an der der Innenseite (30) gegenüberliegenden Außenseite (57) der vorderen Stirnplatte (24) insbesondere lösbar befestigt ist.

23. Schweißzange nach einem der vorangehenden Ansprüche,
**dadurch gekennzeichnet,**
**dass** Abdeckbleche (58) an unteren Enden (59) der Gehäusehälften (22, 23) in Richtung Antriebsgehäuse (10) vorstehen.

24. Schweißzange nach einem der vorangehenden Ansprüche,
**dadurch gekennzeichnet,**
**dass** die Antriebseinrichtung (85) eine insbesondere magnetisch arbeitende Bremseinrichtung (60) aufweist.

25. Schweißzange nach einem der vorangehenden Ansprüche,
**dadurch gekennzeichnet,**
**dass** der Laufwagen (18 - 21) umlaufende Rollkörper (61) zur Reibungsverminderung aufweist.

26. Schweißzange nach einem der vorangehenden Ansprüche,
**dadurch gekennzeichnet,**
**dass** die hintere Stirnplatte (25) im Wesentlichen umgekehrt U-förmig ist und mit ihrer U-Öffnung teilweise das Antriebsgehäuse (10) umgreift.

27. Schweißzange nach einem der vorangehenden Ansprüche,
**dadurch gekennzeichnet,**
**dass** das Antriebsgehäuse (10) einen lösbaren, dem ersten Schweißzangenarm (2) gegenüberliegenden hinteren Gehäuseabschnitt (62) mit elektrischen Zuleitungen (63) und/oder einer Steuerelektronik (64) und/oder einem Drehzahlgeber (65) oder dergleichen aufweist, welcher hintere Gehäuseabschnitt (62) insbesondere in unterschiedlichen Drehstellungen relativ zum übrigen Antriebsgehäuse (10) anordbar und befestigbar ist.

28. Schweißzange nach einem der vorangehenden Ansprüche,
**dadurch gekennzeichnet,**
**dass** das Antriebsgehäuse (10) einen seitlich vorstehenden Befestigungsflansch (66) zur lösbaren Befestigung an einer Grundplatte (67) aufweist.

29. Schweißzange nach einem der vorangehenden Ansprüche,
**dadurch gekennzeichnet,**
**dass** die Grundplatte (67) mit einer Handhabungseinrichtung direkt oder indirekt verbindbar ist.

30. Schweißzange nach einem der vorangehenden Ansprüche,
**dadurch gekennzeichnet,**
**dass** bei indirekter Verbindung mit der Handhabungseinrichtung zwischen dieser und der Grundplatte (67) eine Zangenausgleichseinrichtung (68) angeordnet ist.

31. Schweißzange nach einem der vorangehenden Ansprüche,
**dadurch gekennzeichnet,**
**dass** die Zangenausgleichseinrichtung (68) eine Verstelleinrichtung (69) für den zweiten Schweißarm (3) und/oder das Antriebsgehäuse (10) aufweist.

32. Schweißzange nach einem der vorangehenden Ansprüche,
**dadurch gekennzeichnet,**
**dass** die Verstelleinrichtung (69) eine Verschiebeeinrichtung (70) zwischen insbesondere Grundplatte (67) und einem mit der Handhabungseinrichtung verbindbaren Grundrahmen (71) und eine Antriebseinrichtung (72) aufweist.

33. Schweißzange nach einem der vorangehenden Ansprüche,
**dadurch gekennzeichnet,**
**dass** die Verschiebeeinrichtung (70) zumindest zwei Führungsschienen (73, 74) und diesen zugeordnete Laufwagen (75, 76) aufweist.

34. Schweißzange nach einem der vorangehenden Ansprüche,
**dadurch gekennzeichnet,**
**dass** die Führungsschienen (73, 74) am Grundrahmen (71) lösbar fixiert sind und die Laufwagen (75, 76) entlang der Führungsschienen (73, 74) bewegbar sind, wobei diese an der Grundplatte (67) lösbar fixiert sind.

35. Schweißzange nach einem der vorangehenden Ansprüche,
**dadurch gekennzeichnet,**
**dass** zumindest zwei Laufwagen (75, 76) jeder Führungsschiene (73, 74) zugeordnet sind.

36. Schweißzange nach einem der vorangehenden Ansprüche,
**dadurch gekennzeichnet,**
**dass** Laufwagen (75, 76) und/oder Führungsschienen (73, 74) an Grundplatte (67) beziehungsweise Grundrahmen (71) relativ zu Referenzkanten (77, 78) befestigt sind.

37. Schweißzange nach einem der vorangehenden Ansprüche,
**dadurch gekennzeichnet,**
**dass** der zweite Schweißzangenarm (3) an ei ner vom Antriebsgehäuse (10) abgewandten Unterseite (79) der Grundplatte (67) an seinem Befestigungsende (80) lösbar befestigt ist.

38. Schweißzange nach einem der vorangehenden Ansprüche,
**dadurch gekennzeichnet,**
**dass** das Antriebsgehäuse (10) mit aufgesetztem Verschiebegehäuse (11), die Grundplatte (67), die Zangenausgleichseinrichtung (68) und der Grundrahmen (71) im Wesentlichen übereinander angeordnet sind und in Verschieberichtung (34) und/oder in Richtung quer zur Verschieberichtung im Wesentlichen gleiche Abmessungen aufweisen.

39. Schweißzange nach einem der vorangehenden Ansprüche,
**dadurch gekennzeichnet,**
**dass** ein Faltenbalg (81) der Antriebseinrichtung (85) mit einem Ende (82) an der Innenseite (30) der vorderen Stirnplatte (24) und an seinem anderen Ende (83) insbesondere an einem Absatz (84) innerhalb des Antriebsgehäuses (10) lösbar befestigt ist.

40. Schweißzange nach einem der vorangehenden Ansprüche,
**dadurch gekennzeichnet,**
**dass** zwischen Stirnplatten (24, 25) und Gehäusehälften (22, 23) und/oder zwischen Grundplatte (65) und Antriebsgehäuse (10) oder Verschiebegehäuse (11) ein Formschluss insbesondere durch Passstifte, Passfedem, Folie mit harten Teilchen oder dergleichen gebildet ist.

## Claims

1. Welding tongs (1) with two limbs (2, 3) which can be moved relative to one another, of which at least one first limb (2) is supported such that it can be moved relative to a drive housing (10) between an insertion position and a welding position (4, 5), in which said welding position a work piece which is to be welded is clamped to welding contacts (6, 7) on ends (8, 9) of the welding tong limbs (2, 3), said contacts being essentially inclined towards each other,
**characterised in that**
the welding tongs (1) comprise a self-supporting moveable housing (11), which can move along the drive housing (10) and which comprises a retaining device (12) which supports the first welding tong limb (2) outside of the drive housing (10).

2. Welding tongs according to Claim 1,
**characterised in that**
the retaining device (12) can be moved together with the first welding tong limb (2) between its insertion and welding positions (4, 5).

3. Welding tongs according to Claim 1 or 2,
**characterised in that**
the moveable housing (11) is supported for movement on the drive housing (10) and / or on another part of the welding tongs by at least one linear guide, in particular a sliding guide (13).

4. Welding tongs according to one of the aforementioned claims,
**characterised in that**
the sliding guide (13) comprises a guide rail (14, 15, 16, 17) and at least one bogie (18, 19, 20, 21), which are moveable relative to one another.

5. Welding tongs according to one of the aforementioned claims,
**characterised in that**
the guide rail (14 - 17) on the moveable housing (11) and the bogie (18 - 21) on the drive housing (10) are each particularly detachably mounted.

6. Welding tongs according to one of the aforementioned claims,
**characterised in that**
the bogie (18 to 21) is fixed immovably on the drive housing (10).

7. Welding tongs according to one of the aforementioned claims,
**characterised in that**
at least two bogies are arranged spaced from one another in the displacement direction (34) of the guide rail (14 - 17).

8. Welding tongs according to one of the aforementioned claims,
**characterised in that**
the bogie (18 - 21) comprises a lubricant reservoir (94).

9. Welding tongs according to one of the aforementioned claims,
**characterised in that**
the moveable housing (11) comprises two housing halves (22, 23), arranged essentially symmetrically to one another and extending in the displacement direction (34) and which are detachably joined together at least at their ends by a front and / or rear face plate (24, 25), wherein the front face plate is formed as a retaining device (12).

10. Welding tongs according to one of the aforementioned claims,
**characterised in that**
the housing halves (22, 23) are formed in an approximate C-shape and a cover panel (28) is arranged between two mutually facing upper ends (26, 27) of the housing halves (22, 23).

11. Welding tongs according to one of the aforementioned claims,
**characterised in that**
insertion grooves (29) for the circumferential retention of the cover panel (28) are formed in the upper ends (26, 27) of the housing halves (22, 23) and in mutually facing inner sides (30, 31) of the face plates (24, 25).

12. Welding tongs according to one of the aforementioned claims,
**characterised in that**
each housing half (22, 23) comprises on its inner side (32, 33) two rail indentations (35, 36) running in the displacement direction (34) at least for the insertion of the lower ends (37) of the corresponding guide rails (14 - 17).

13. Welding tongs according to one of the aforementioned claims,
**characterised in that**
the guide rails (14 - 17) are detachably mounted in the associated rail indentation (35 to 36), in particular by screwed joints.

14. Welding tongs according to one of the aforementioned claims,
**characterised in that**
a fixing slot formed in the height direction (39) of the guide rail (14 - 17) in the housing halves (22, 23) runs along the rail indentation (35, 36) and opens out into the same or is arranged adjacent to the same and a number of clamping holes (40) running transversely to the fixing slot (38) are formed in the housing halves (22, 23) for screwing in appropriate clamping screws (41).

15. Welding tongs according to one of the aforementioned claims,
**characterised in that**
the rail indentation (35, 36) formed with a different depth comprises indentation sections (42, 43) adjacent to one another, wherein the first indentation section (42) with a shallower depth accommodates the lower end (37) of the guide rail (14 - 17) and a pressure pad (44) is arranged in the second indentation section (43) with a greater depth, which in particular detachably fixes the guide rail (14 - 17) within the rail indentation (35, 36) relative to a rail reference edge (45).

16. Welding tongs according to one of the aforementioned claims,
**characterised in that**
the rail reference edge (45) is formed by a step edge (46) between the two indentation sections (42, 42) and / or by an edge (47) of the rail indentation (35, 36) lying opposite the pressure pad relative to the guide rail (14 - 17).

17. Welding tongs according to one of the aforementioned claims,
**characterised in that**
the pressure pad (44) is mounted detachably within the second indentation section (43) and for force application in particularly sideward in the direction of the rail reference edge (45).

18. Welding tongs according to one of the aforementioned claims,
**characterised in that**
screws and in particular set screws (48) are provided for the sideward application of force to the pressure pad (44).

19. Welding tongs according to one of the aforementioned claims,
**characterised in that**
the bogie (18 to 21) can be pressed on a bogie reference edge (49) formed outside on the drive housing (10) and extending in the displacement direction (34).

20. Welding tongs according to one of the aforementioned claims,
**characterised in that**
screws and in particular set screws (50) are provided for pressing on the bogie reference edge (49).

21. Welding tongs according to one of the aforementioned claims,
**characterised in that**
a drive device (85) within the drive housing (10) comprises a screw drive (52) with threaded rod (53) and screw drive nut (54) as a mechanical adjusting device (51) in the displacement direction (34), wherein the screw drive nut (54) is arranged rotatable, but axially fixed and the threaded rod (53) rotationally fixed, but axially moveable, the said threaded rod (53) engaging, particularly rotationally fixed, with its extended end (55) in an indentation (56) formed on the inner side (30) of the front face plate (24) and being mounted detachably on the front face plate (24).

22. Welding tongs according to one of the aforementioned claims,
**characterised in that**
the first welding tong limb (2) is particularly detachably mounted on the outer side (57) of the front face plate (24) opposite the inner side (30).

23. Welding tongs according to one of the aforementioned claims,
**characterised in that**
the cover panels (58) on the lower ends (59) of the housing halves (22, 23) protrude in the direction of the drive housing (10).

24. Welding tongs according to one of the aforementioned claims,
**characterised in that**
the drive device (85) comprises a particularly magnetically operating brake device (60).

25. Welding tongs according to one of the aforementioned claims,
**characterised in that**
the bogie (18 - 21) comprises circulating rolling elements (61) for reducing friction.

26. Welding tongs according to one of the aforementioned claims,
**characterised in that**
the rear face plate (25) is essentially inverse U-shaped and partially grips around the drive housing (10) with its U-opening.

27. Welding tongs according to one of the aforementioned claims,
**characterised in that**
the drive housing (10) comprises a detachable rear housing section (62) lying opposite the first welding tong limb (2) with electrical cables (63) and / or a control electronics unit (64) and / or a tachometer generator (65) or similar device, the said rear housing section (62) being in particular arrangeable and mountable in different rotational positions relative to the remaining drive housing (10).

28. Welding tongs according to one of the aforementioned claims,
**characterised in that**
the drive housing (10) comprises a sideward protruding mounting flange (66) for the detachable mounting of a base plate (67).

29. Welding tongs according to one of the aforementioned claims,
**characterised in that**
the base plate (67) can be directly or indirectly connected to a handling device.

30. Welding tongs according to one of the aforementioned claims,
**characterised in that**
with an indirect connection to the handling device a tongs compensating device (68) is arranged between the said handling device and the base plate.

31. Welding tongs according to one of the aforementioned claims,
**characterised in that**
the tongs compensating device (68) comprises an adjustment device (69) for the second welding tong limb (3) and / or the drive housing (10).

32. Welding tongs according to one of the aforementioned claims,
**characterised in that**
the adjustment device (69) comprises a displacement device (70) between particularly the base plate (67) and a base frame (71), which can be connected to the handling device and a drive device (72).

33. Welding tongs according to one of the aforementioned claims,
**characterised in that**
the displacement device (70) comprises at least two guide rails (73, 74) and bogies (75, 76) assigned to them.

34. Welding tongs according to one of the aforementioned claims,
**characterised in that**
the guide rails (73, 74) are detachably fixed to the base frame (71) and the bogies (75, 76) can be moved along the guide rails (73, 74), wherein they are detachably fixed to the base plate (67).

35. Welding tongs according to one of the aforementioned claims,
**characterised in that**
at least two bogies (75, 76) are assigned to each guide rail (73, 74).

36. Welding tongs according to one of the aforementioned claims,
**characterised in that**
the bogies (75, 76) and / or the guide rails (73, 74) are mounted on the base plate (67) or respectively on the base frame (71) relative to the reference edges (77, 78).

37. Welding tongs according to one of the aforementioned claims,
**characterised in that**
the second welding tong limb (3) is detachably mounted at its mounting end (80) on an underside (79) of the base plate (67) facing away from the drive housing (10).

38. Welding tongs according to one of the aforementioned claims,
**characterised in that**
the drive housing (10) with the moveable housing (11) in place, the base plate (67), the tongs compensating device (68) and the base frame (71) are arranged essentially one above the other and exhibit essentially the same dimensions in the displacement direction (34) and / or in the direction transverse to the displacement direction.

39. Welding tongs according to one of the aforementioned claims,
**characterised in that**
a bellows (81) of the drive device (85) is detachably mounted with one end (82) on the inner side (30) of the front face plate (24) and its other end (83) particularly on a shoulder (84) within the drive housing (10).

40. Welding tongs according to one of the aforementioned claims,
**characterised in that**
a positively locked joint is formed between the face plates (24, 25) and the housing halves (22, 23) and / or between the base plate (65) and drive housing (10) or moveable housing (11), in particular by locating pins, feather keys, film with hard particles or similar components.

## Revendications

1. Pince de soudage (1) à deux bras de pince de soudage mobiles l'un par rapport à l'autre (2, 3), dont au moins un premier (2) est monté de façon à pouvoir se déplacer entre une position d'insertion et une position de soudage (4, 5) par rapport à un boîtier d'entraînement (10), dans laquelle, dans ladite position de soudage, une pièce à souder est serrée entre des contacts de soudage essentiellement dirigés l'un vers l'autre (6, 7) agencés aux extrémités (8, 9) des bras de pince de soudage (2, 3),
**caractérisée**
**en ce que** la pince de soudage (1) comporte un boîtier coulissant autoportant (11) mobile le long du boîtier d'entraînement (10) et qui comporte un dispositif de retenue (12) supportant le premier bras de pince de soudage (2) à l'extérieur du boîtier d'entraînement (10).

2. Pince de soudage selon la revendication 1,
**caractérisée**
**en ce que** le dispositif de retenue (12) est mobile conjointement avec le premier bras de pince de soudage (2) entre lesdites positions d'insertion et de soudage (4, 5).

3. Pince de soudage selon la revendication 1 ou 2,
**caractérisée**
**en ce que** le boîtier coulissant (11) est monté de façon mobile sur le boîtier d'entraînement (10) et/ou sur une autre partie de la pince de soudage via au moins un guidage linéaire, et en particulier un guidage à glissière (13).

4. Pince de soudage selon l'une des revendications précédentes,
**caractérisée**
**en ce que** le guidage à glissière (13) comporte un rail de guidage (14, 15, 16, 17) et au moins un chariot (18, 19, 20, 21) mobiles l'un par rapport à l'autre.

5. Pince de soudage selon l'une des revendications précédentes,
**caractérisée**
**en ce que** le rail de guidage (14 à 17) et le chariot (18 à 21) sont en particulier montés chacun de manière amovible respectivement sur le boîtier coulissant (11) et sur le boîtier d'entraînement (10).

6. Pince de soudage selon l'une des revendications précédentes,
**caractérisée**
**en ce que** le chariot (18 à 21) est monté de manière fixe sur le boîtier d'entraînement (10).

7. Pince de soudage selon l'une des revendications précédentes,
**caractérisée**
**en ce qu'**au moins deux chariots sont agencés avec un espacement selon la direction de déplacement (34) du rail de guidage (14 à 17).

8. Pince de soudage selon l'une des revendications précédentes,
**caractérisée**
**en ce que** le chariot (18 à 21) comporte un réservoir de lubrifiant (94).

9. Pince de soudage selon l'une des revendications précédentes,
**caractérisée**
**en ce que** le boîtier coulissant (11) comporte deux moitiés de boîtier (22, 23) allongées selon la direction de déplacement (34), essentiellement symétriques l'une par rapport à l'autre et reliées entre elles de manière amovible au moins à leurs extrémités par une plaque frontale avant et/ou arrière (24, 25), dans laquelle la plaque frontale avant est conformée comme un dispositif de retenue (12).

10. Pince de soudage selon l'une des revendications précédentes,
**caractérisée**
**en ce que** les moitiés de boîtier (22, 23) présentent sensiblement une forme de C et en ce qu'une tôle de recouvrement (28) est agencée entre deux extrémités supérieures opposées (26, 27) des moitiés de boîtier (22, 23).

11. Pince de soudage selon l'une des revendications précédentes,
**caractérisée**
**en ce que** des rainures d'insertion (29) sont constituées pour la fixation circonférentielle de la tôle de recouvrement (28) dans les extrémités supérieures (26, 27) des moitiés de boîtier (22, 23) et dans des faces internes opposées (30, 31) des plaques frontales (24, 25).

12. Pince de soudage selon l'une des revendications précédentes,
**caractérisée**
**en ce que** chaque moitié de boîtier (22, 23) comporte sur sa face interne (32, 33) deux échancrures de rail (35, 36) disposées selon la direction de déplacement (34) permettant au moins l'insertion d'extrémités inférieures (37) des rails de guidage correspondants (14 à 17) .

13. Pince de soudage selon l'une des revendications précédentes,
**caractérisée**
**en ce que** les rails de guidage (14-17) sont fixés de manière amovible dans l'échancrure de rail correspondante (35 à 36), en particulier à l'aide de vis.

14. Pince de soudage selon l'une des revendications précédentes,
**caractérisée**
**en ce qu'**une fente de fixation constituée dans le sens de la hauteur (39) des rails de guidage (14 à 17) dans les moitiés de boîtier (22, 23) s'étend le long de l'échancrure de rail (35, 36) et débouche dans celle-ci ou est agencée à proximité de celle-ci, et en ce qu'un certain nombre de perçages de serrage (40) orientés transversalement par rapport à la fente de fixation (38) sont agencés dans la moitié de
boîtier (22, 23), dans lesquels peuvent être vissées des vis de serrage correspondantes (41).

15. Pince de soudage selon l'une des revendications précédentes,
**caractérisée**
**en ce que** l'échancrure de rail (35, 36) comporte des sections d'échancrure (42, 43) adjacentes de différentes profondeurs, dans laquelle la première section d'échancrure (42) de moindre profondeur reçoit l'extrémité inférieure (37) des rails de guidage (14 à 17) et dans laquelle une baguette de compression (44) est agencée dans la deuxième section d'échancrure (43) de plus grande profondeur, ladite baguette fixant en particulier de manière amovible les rails de guidage (14 à 17) dans l'échancrure de rail (35, 36) par rapport à un bord de référence de rail (45).

16. Pince de soudage selon l'une des revendications précédentes,
**caractérisée**
**en ce que** le bord de référence de rail (45) est constitué par un redan (46) entre les deux sections d'échancrure (42, 43) et/ou par un bord (47) de l'échancrure de rail (35, 36) situé en face de la baguette de compression par rapport aux rails de guidage (14 à 17).

17. Pince de soudage selon l'une des revendications précédentes,
**caractérisée**
**en ce que** la baguette de compression (44) est fixée de manière amovible dans la deuxième section d'échancrure (43) et peut être sertie en particulier latéralement en direction du bord de référence de rail (45).

18. Pince de soudage selon l'une des revendications précédentes,
**caractérisée**
**en ce que** des vis, et en particulier des vis sans tête (48), sont pourvues pour le sertissage latéral de la baguette de compression (44).

19. Pince de soudage selon l'une des revendications précédentes,
**caractérisée**
**en ce que** le chariot (18 à 21) peut être appuyé contre un bord de référence de chariot (49) s'étendant en direction de déplacement (34) et constitué à l'extérieur du boîtier d'entraînement (10).

20. Pince de soudage selon l'une des revendications précédentes,
**caractérisée**
**en ce que** des vis, et en particulier des vis sans tête (50), sont pourvues pour le serrage contre le bord de référence du chariot (49).

21. Pince de soudage selon l'une des revendications précédentes,
**caractérisée**
**en ce qu'**un dispositif d'entraînement (85) agencé dans le boîtier d'entraînement (10) comporte un entraînement à tige filetée (52) avec une tige filetée (53) et un écrou fileté (54) comme dispositif de déplacement mécanique (51) selon la direction de déplacement (34), moyennant quoi l'écrou fileté (54) est agencé de manière rotative mais axialement fixe et la tige filetée (53) est agencée sans rotation mais avec un déplacement axial, ladite tige filetée (53) s'engageant en particulier sans rotation avec son extrémité extensible (55) dans une échancrure (56) constituée dans la face interne (30) de la plaque frontale avant (24) et étant fixée de manière amovible à la plaque frontale avant (24).

22. Pince de soudage selon l'une des revendications précédentes,
**caractérisée**
**en ce que** le premier bras de pince de soudage (2) est en particulier fixé de manière amovible à la face externe (57) opposée à la face interne (30) de la plaque frontale avant (24).

23. Pince de soudage selon l'une des revendications précédentes,
**caractérisée**
**en ce que** des tôles de recouvrement (58) font saillie des extrémités inférieures (59) des moitiés de boîtier (22, 23) en direction du boîtier d'entraînement (10).

24. Pince de soudage selon l'une des revendications précédentes,
**caractérisée**
**en ce que** le dispositif d'entraînement (85) comporte en particulier un dispositif de freinage à actionnement magnétique (60).

25. Pince de soudage selon l'une des revendications précédentes,
**caractérisée**
**en ce que** le chariot (18 à 21) comporte des paliers de roulement périphériques (61) pour réduire les frottements.

26. Pince de soudage selon l'une des revendications précédentes,
**caractérisée**
**en ce que** la plaque frontale arrière (25) présente une forme essentiellement de U inversé et entoure de manière partielle dans son ouverture en forme de U le boîtier d'entraînement (10).

27. Pince de soudage selon l'une des revendications précédentes,
**caractérisée**
**en ce que** le boîtier d'entraînement (10) comporte une section de boîtier arrière (62) amovible faisant face au premier bras de pince de soudage (2) avec des conducteurs électriques (63) et/ou un dispositif électronique de commande (64) et/ou un capteur de vitesse (65) ou un dispositif similaire, ladite section de boîtier arrière (62) pouvant en particulier être agencée et fixée dans différentes positions de révolution par rapport à l'autre boîtier d'entraînement (10).

28. Pince de soudage selon l'une des revendications précédentes,
**caractérisée**
**en ce que** le boîtier d'entraînement (10) comporte une bride de fixation faisant saillie latéralement (66) pour permettre une fixation amovible à une plaque de base (67).

29. Pince de soudage selon l'une des revendications précédentes,
**caractérisée**
**en ce que** la plaque de base (67) peut être connectée directement ou indirectement à un dispositif de manutention.

30. Pince de soudage selon l'une des revendications précédentes,
**caractérisée**
**en ce que** dans le cas d'une connexion indirecte avec le dispositif de manutention entre celui-ci et la plaque de base (67), un dispositif d'équilibrage de pince (68) est agencé.

31. Pince de soudage selon l'une des revendications précédentes,
**caractérisée**
**en ce que** le dispositif d'équilibrage de pince (68) comporte un dispositif de déplacement (69) pour le deuxième bras de soudage (3) et/ou pour le boîtier d'entraînement (10).

32. Pince de soudage selon l'une des revendications précédentes,
**caractérisée**
**en ce que** le dispositif de déplacement (69) comporte un dispositif coulissant (70) en particulier entre la plaque de base (67) et un châssis de base (71) connectable au dispositif de manutention, ainsi qu'un dispositif d'entraînement (72).

33. Pince de soudage selon l'une des revendications précédentes,
**caractérisée**
**en ce que** le dispositif coulissant (70) comporte au moins deux rails de guidage (73, 74) et un chariot qui y est installé (75, 76).

34. Pince de soudage selon l'une des revendications précédentes,
**caractérisée**
**en ce que** les rails de guidage (73, 74) sont fixés de manière amovible au châssis de base (71) et en ce que les chariots (75, 76) peuvent être déplacés sur les rails de guidage (73, 74), dans laquelle ceux-ci sont fixés de manière amovible à la plaque de base (67).

35. Pince de soudage selon l'une des revendications précédentes,
**caractérisée**
**en ce qu'**au moins deux chariots (75, 76) sont montés sur chaque rail de guidage (73, 74).

36. Pince de soudage selon l'une des revendications précédentes,
**caractérisée**
**en ce que** des chariots (75, 76) et/ou des rails de guidage (73, 74) sont fixés à la plaque de base (67) ou au châssis de base (71) par rapport aux bords de référence (77, 78).

37. Pince de soudage selon l'une des revendications précédentes,
**caractérisée**
**en ce que** le deuxième bras de pince de soudage (3) est fixé de manière amovible par son extrémité de fixation (80) à une face inférieure (79) de la plaque de base (67) opposée au boîtier d'entraînement (10).

38. Pince de soudage selon l'une des revendications précédentes,
**caractérisée**
**en ce que** le boîtier d'entraînement (10) avec le boîtier coulissant (11) installé, la plaque de base (67), le dispositif d'équilibrage de pince (68) et le châssis de base (71) sont agencés essentiellement de façon juxtaposée et présentent des dimensions essentiellement identiques dans la direction de déplacement (34) et/ou dans une direction transversale par rapport à la direction de déplacement.

39. Pince de soudage selon l'une des revendications précédentes,
**caractérisée**
**en ce qu'**un soufflet (81) du dispositif d'entraînement (85) est fixé de manière amovible par une extrémité (82) à la face interne (30) de la plaque frontale avant (24) et par son autre extrémité (83) en particulier à un talon (84) situé à l'intérieur du boîtier d'entraînement (10).

40. Pince de soudage selon l'une des revendications précédentes,
**caractérisée**
**en ce que**, entre la plaque frontale (24, 25) et les moitiés de boîtier (22, 23) et/ou entre la plaque de base (65) et le boîtier d'entraînement (10) ou le boîtier coulissant (11), un emboîtement mécanique est constitué, en particulier par des gougeons, des clavettes, un film métallique à éléments durs, ou un système similaire.
